# EUROPEAN PATENT APPLICATION

(11) **EP 4 155 045 A1**
(43) Date of publication of application: **29.03.2023**
(21) Application number: 21830142.2
(22) Date of filing: 19.01.2021
(51) Int. Cl.: B29C 43/02, H01M 50/116, B29C 43/16, B29C 43/36, B29C 53/04, B29C 53/36, B29C 53/38, B29C 65/00

(54) **POUCH, APPARATUS FOR MOLDING POUCH, AND METHOD FOR MANUFACTURING SECONDARY BATTERY COMPRISING POUCH**

(30) Priority: 26.06.2020 KR 20200078759
(71) Applicant: LG Energy Solution, Ltd., Seoul 07335 (KR)
(72) Inventor: LEE, Han Young, Daejeon 34122 (KR)
(74) Representative: Plasseraud IP
(86) International application number: PCT/KR2021/000697
(87) International publication number: WO 2021/261698

(57) **Abstract**

An apparatus for molding a pouch, which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, according to the present invention comprises: a lower mold in which a first groove recessed by a predetermined depth from a top surface thereof is formed, and a second groove is additionally recessed from a bottom surface of the first grove; and an upper mold on which a flat portion is formed on one surface thereof, which is inserted into the first groove, and a protrusion inserted into the second groove protrudes from the flat portion, wherein, when the upper mold and the lower mold are pressed in a state in which the pouch sheet is placed between the upper mold and the lower mold, the pouch sheet is molded so that each of the first seating part and the second seating part are molded at a portion of the pouch sheet, which is pressed by the flat portion, and a sidewall configured to connect the first seating part to the second seating part and form a surface parallel to a side surface of the electrode assembly when the electrode assembly is mounted is formed.

## Description

### CROSS-REFERENCE TO RELATED APPLICATION

The present application claims the benefit of the priority of Korean Patent Application No. 10-2020-0078759, filed on June 26, 2020, which is hereby incorporated by reference in its entirety.

### TECHNICAL FIELD

The present invention relates to a pouch of a secondary battery, an apparatus for molding the pouch, and a method for manufacturing the secondary battery comprising the pouch, and more particularly, to a molding apparatus for molding a pouch that is capable of mounting an electrode having a thicker thickness by molding a sidewall within a moldable range of a pouch sheet, a pouch manufactured using the molding apparatus, and a method for manufacturing a secondary battery comprising the pouch.

### BACKGROUND ART

The demands for high-efficiency secondary batteries are rapidly increasing in the mobile device and electric vehicle fields. Among such the secondary batteries, a lithium secondary battery having high energy density, maintaining a relatively high voltage, and having a low self-discharge rate is commercially widely used, and research and development for improving performance thereof is actively being conducted.

The secondary battery has a structure in which an electrode assembly and an electrolyte are embedded in a case such as a can or a pouch. The electrode assembly has a structure in which positive electrodes, separators, and negative electrodes are repeatedly stacked. In general, the electrode assembly may be classified into a winding type electrode assembly in which the positive electrodes, the separators, and the negative electrodes, which are in the stacked state, are rolled to be embedded in the case and a stack type (stacked) electrode assembly in which the positive electrodes, the separators, and the negative electrodes, each of which is cut to a predetermined size, are stacked.

Since the winding type electrode assembly has a spirally wound structure, the winding type electrode assembly is suitable for being mounted on a cylindrical battery, but is disadvantageous in space utilization for a prismatic or pouch type battery. On the other hand, since the stack type electrode assembly is adjusted in size when the electrode and the separator are cut, the prismatic shape fitted with the case is easily obtained, but a manufacturing process is relatively complicated, and the stack type electrode assembly is relatively vulnerable to an external impact. Also, a stack & folding method has been developed to combine the advantages of the winding type and the stack type. In the stack & folding method, a C-type bicell (a bicell having a stack structure of a positive electrode/separator/negative electrode/separator/positive electrode) and an A-type bicell (a bicell having a stack structure of a negative electrode/separator/positive electrode/separator/negative electrode) are placed on a folding separator to fold the bicells, thereby manufacturing the electrode assembly.

Also, the electrode assembly manufactured in various manners as described above is mounted in a case such as a can or a pouch.

Among them, the pouch is manufactured by stacking a metal layer made of an aluminum material and a resin layer made of a polymer material, but when the pouch is provided in the form of a sheet, the pouch may be processed to have a fixed shape through the molding apparatus.

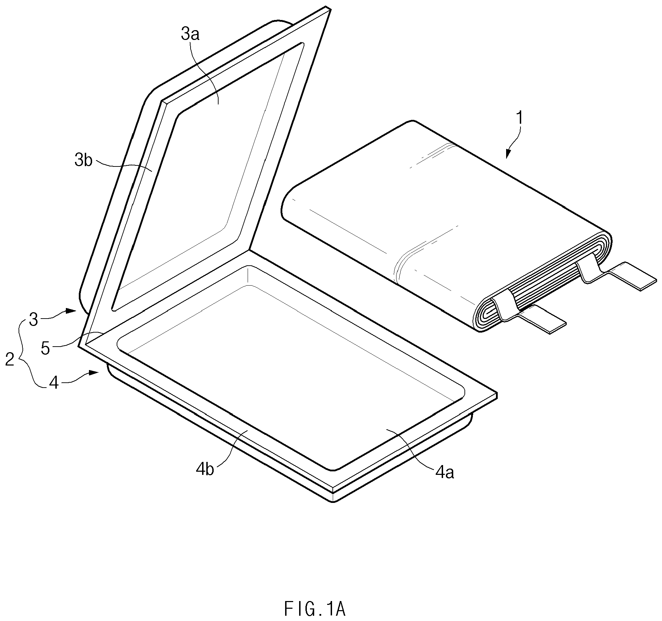

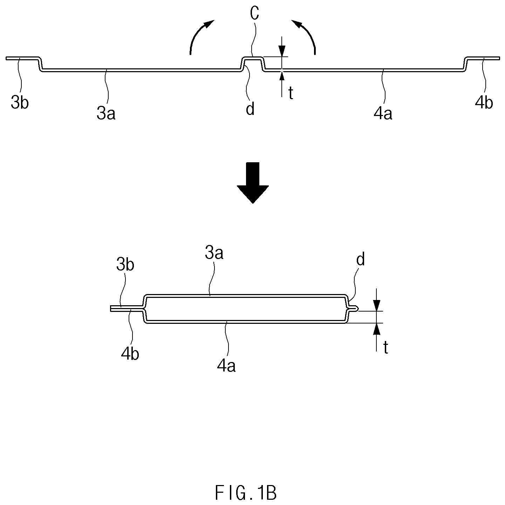

That is, referring to FIG. 1a, which illustrates a state in which an electrode assembly is mounted in the pouch according to the related art, and FIG. 1b, which illustrates a cross-sectional view of a state in which the pouch according to the related art is unfolded or closed, a pouch 2 on which an electrode assembly 1 having a hexahedral shape is mounted comprises a second seating part 4 on which a bottom surface of the electrode assembly 1 is seated and a first seating part 3 that covers a top surface of the electrode assembly 1. When the electrode assembly 1 is mounted in an opened state, the first seating part 3 and the second seating part 4 are folded to cover the top and bottom surfaces of the electrode assembly 1 and then is in a closed state.

In the closed state, sealing portions 3b and 4b of the first seating part 3 and the second seating part 4 are in contact with each other, and in the state in which the first seating part 3 and the second seating part 4 are in contact with each other, heat and a pressure are applied to seal the pouch 2. Here, each of grooves 3a and 4a of the first seating part 3 and the fourth seating part 4 may be provided to have a depth at which the electrode assembly 1 is capable of mounted.

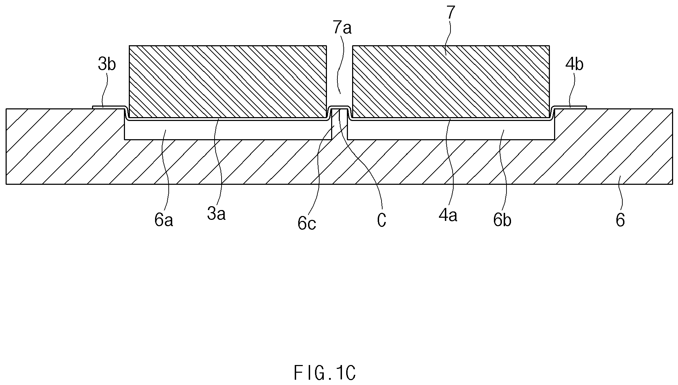

Also, the pouch having the above-described structure is manufactured by processing a flat pouch sheet. That is, referring to FIG. 1c illustrating a cross-sectional view of an apparatus for molding the pouch according to the related art, the apparatus for molding the pouch according to the related art comprises an upper mold 7 and a lower mold 6. The lower mold 6 has a structure in which two grooves 6a and 6b are formed in both sides thereof, and a protrusion 6c is disposed between the two grooves 6a and 6b so as to partition the two grooves 6a and 6b from each other.

Also, the upper mold 7 that ascends and descends above the lower mold 6 has two cores 7 that are respectively inserted into the grooves 6a and 6b of the lower mold 6 and has a shape in which a hole 7a is formed so that the protrusion 6c of the lower mold 6 is capable of being inserted between the cores 7.

Thus, in the state in which the pouch sheet is seated on the lower mold 6, when the upper mold 7 descends to press the pouch sheet, the pouch sheet is molded to the pouch 2 having the shape of FIG. 1b according to shapes of the grooves 6a and 6b and the protrusion 6c.

The pouch 2 may be folded at a middle point thereof along a bending point C to accommodate the electrode assembly 1 therein. The bending point C is a folded portion 5 in FIG. 1a.

Thus, as described above, the pouch 2 has a structure in which a metal layer and a resin layer are stacked. Thus, when the molding is performed between the upper mold 7 and the lower mold 6, there is a limit to elongation of the metal layer. As a result, since the portion d at which the elongation is performed does not increase in size, a distance t between the groove 3a of the first seating part and the sealing portion 3b and a distance between the groove 4a of the second seating part and the sealing portion 4b are inevitably limited.

Therefore, a thickness of the electrode assembly 1 mounted on the pouch is also limited due to the molding conditions of the pouch. Due to these constraints, the pouch type secondary battery having a larger capacity has been provided in the form that increases in area without increasing in thickness of the electrode assembly.

However, as the need for the high-capacity secondary battery gradually increases, the pouch capable of mounting the electrode assembly having a thicker thickness and the molding apparatus capable of manufacturing the pouch have been required.

### DISCLOSURE OF THE INVENTION

### TECHNICAL PROBLEM

A main object of the present invention is to provide a pouch capable of mounting an electrode assembly having a thicker thickness in consideration of gradually increasing demands of a high-capacity secondary battery, a molding apparatus capable of manufacturing the pouch, and a method for manufacturing a secondary battery comprising the pouch.

### TECHNICAL SOLUTION

The present invention for achieving the above-described object provides a pouch, a molding apparatus for manufacturing the pouch, and a method for manufacturing a secondary battery comprising the pouch.

An apparatus for molding a pouch, which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, according to the present invention comprises: a lower mold in which a first groove recessed by a predetermined depth from a top surface thereof is formed, and a second groove is additionally recessed from a bottom surface of the first grove; and an upper mold on which a flat portion is formed on one surface thereof, which is inserted into the first groove, and a protrusion inserted into the second groove protrudes from the flat portion, wherein, when the upper mold and the lower mold are pressed in a state in which the pouch sheet is placed between the upper mold and the lower mold, the pouch sheet is molded so that each of the first seating part and the second seating part are molded at a portion of the pouch sheet, which is pressed by the flat portion, and a sidewall configured to connect the first seating part to the second seating part and form a surface parallel to a side surface of the electrode assembly when the electrode assembly is mounted is formed.

The pouch may be formed by stacking a metal layer made of an aluminum material and a resin layer made of a polymer material, and a height of the protrusion protruding from the flat portion may be determined according to an elongation rate of the metal layer.

The second groove may be disposed at a center of the first groove, and the protrusion may be disposed at a center of the flat portion.

Each of an edge portion of the upper mold, which is inserted into the first groove, and an edge portion of the protrusion may be rounded at a predetermined curvature.

Furthermore, a pouch which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, according to the present invention comprises: the first seating part configured to cover one of upper and lower portions of the electrode assembly; the second seating part configured to cover the other one of the upper and lower portions of the electrode assembly and have one side connected to one side of the first seating part; and a sidewall having one side connected to one side of the first seating part and the other side connected to the second seating part, wherein the sidewall is folded at each of the first seating part and the second seating part and is formed in a flat planar shape on each of both inner and outer surfaces of the pouch. The sidewall may be folded to be perpendicular to the first seating part and the second seating part.

Each of the first seating part and the second seating part may be formed by allowing a sealing portion to extend from each of remaining sides except for a side connected to the sidewall, and when the electrode assembly is mounted to be folded, the sealing portion of the first seating part and the sealing portion of the second seating part may be sealed.

When the first seating part and the second seating part are folded to be parallel to each other, an extending length of each of the sealing portion of the first seating part and the sealing portion of the second seating part, which respectively extend from the first seating part and the second seating part, may be determined according to a length of the sidewall so that the sealing portion of the first seating part and the sealing portion of the second seating part are sealed.

A stepped portion having a concavely recessed shape may be formed in each of an edge configured to connect the first seating part to the sidewall and an edge configured to connect the second seating part to the sidewall.

Furthermore, the present invention may additionally provide a method for manufacturing a secondary battery comprising a pouch having the above-described configuration.

A method for manufacturing a secondary battery comprising a pouch, which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, and an electrode assembly, which is embedded together with an electrolyte in the pouch, according to the present invention comprises: a pouch molding step (S10) of molding the pouch; and a sealing step (S20) of embedding the electrode assembly and the electrolyte in the molded pouch to seal a sealing portion of the pouch, wherein the pouch molding step (S10) comprises: a step (S11) of seating a pouch sheet on a lower mold in which a first groove recessed by a predetermined depth from a top surface thereof, and a second groove is additionally recessed from a bottom surface of the first groove; a step (S12) of pressing the pouch sheet to mold the pouch by using an upper mold on which a flat portion is formed on one surface thereof, which is inserted into the first groove, and a protrusion inserted into the second groove protrudes from the flat portion; and a step (S13) of folding a pouch sheet that is molded to form first and second seating parts, which face each other, and a sidewall connecting the first seating part to the second seating part.

The sidewall may be molded so that each of both inner and outer surfaces thereof has a flat planer shape.

In the step (S13) of folding the molded pouch sheet, the sidewall may be folded to be perpendicular to the first seating part and the second seating part.

### ADVANTAGEOUS EFFECTS

In the pouch having the above-described configuration according to the present invention, the planar sidewall connecting the first seating part to the second seating part may be formed to mount the electrode assembly having the thicker thickness by adjusting the length of the sidewall.

That is, although the elongation of the metal layer is limited in the pouch according to the related art to limit the thickness of the mountable electrode assembly, since the sidewall in the pouch according to this specification has the flat surface that is not elongated between the upper mold and the lower mold, the length of the flat surface may be adjusted to mount the electrode assembly having the thicker thickness.

In addition, the edge portions of the upper mold and the lower mold may be rounded to reduce the deformation due to the pouch sheet to be stabbed and pressed.

### BRIEF DESCRIPTION OF THE DRAWINGS

FIG. 1a is a perspective view illustrating a state in which an electrode assembly is mounted in a pouch according to a related art.
FIG. 1b is a cross-sectional view illustrating an unfolded state and a closed state (folded state) of the pouch according to the related art.
FIG. 1c is a cross-sectional view of an apparatus for molding the pouch according to the related art.
FIG. 2 is a cross-sectional view of an apparatus for molding a pouch according to an embodiment of the present invention.
FIG. 3 is a cross-sectional view illustrating a state in which an electrode assembly is mounted in the pouch manufactured using the apparatus for molding the pouch of FIG. 2.
FIG. 4 is a cross-sectional view illustrating a state in which the electrode assembly is mounted in the pouch according to the related art and a cross-sectional view illustrating a state in which the electrode assembly having a thicker thickness is mounted in the pouch according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention provides a pouch, a molding apparatus capable of manufacturing the pouch, and a method for manufacturing a secondary battery comprising the pouch. Hereinafter, preferred embodiments of the present invention will be described in more detail with reference to the accompanying drawings.

### First Embodiment

The present invention provides an apparatus for molding a pouch as a first embodiment. An apparatus for molding a pouch according to the present invention comprises a first seating part 11 and a second seating part 12, which are connected to each other. When an electrode assembly 1 is mounted, the first seating part 11 and the second seating part 12 are respectively folded to cover top and bottom surfaces of the electrode assembly 1 to manufacture a pouch 10 that is sealed in a state in which sealing portions 11a and 12a of the first seating part 11 and the second seating part 12 are in contact with each other.

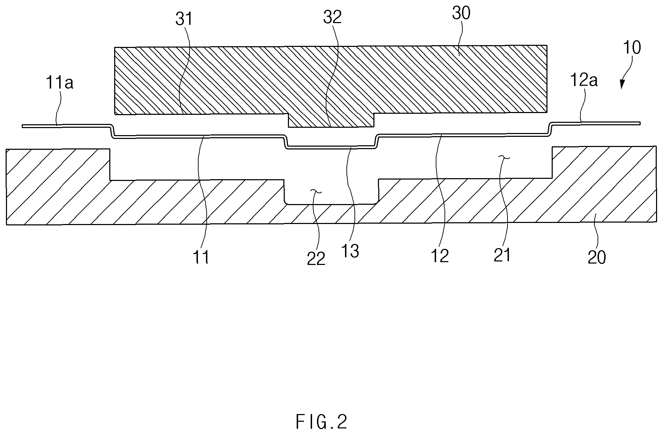

FIG. 2 is a cross-sectional view of the apparatus for molding the pouch according to an embodiment of the present invention. As illustrated in FIG. 2, the molding apparatus according to this specification comprises a lower mold 20 and an upper mold 30.

The lower mold 20 has a flat bottom surface. Here, a first groove 21 is formed at a predetermined depth in the top surface, and a second groove 22 is formed in a bottom surface of the first groove 21.

The first seating part 11 of the pouch 10 is mold at one side of the first groove 21 based on the second groove 22, and the second seating part 12 is molded at the other side of the first groove 21 based on the second groove 22. Also, the sidewall 13 of the pouch 10 is formed on a portion at which the second groove 22 is disposed. Thus, an area of the first groove 21 is determined according to sizes (areas) of the first seating part 11 and the second seating part 12 of the pouch 10 to be manufactured. Likewise, an area of the second groove 22 is determined according to a size of the sidewall 13 connecting the first seating part 11 to the second seating part 12.

However, a depth of the first groove 21 and a depth of the second groove 22 may be determined according to an elongation rate of a metal layer provided in the pouch 10. That is, since a pouch sheet molded as the pouch 10 is provided by stacking a metal layer made of an aluminum material and a resin layer made of a polymer material. Thus, in order to prevent the metal layer from being damaged, the depths (a height at which the flat portion is inserted and a height at which a protrusion protrudes from the flat portion) are determined according to the elongation rate of the metal layer.

Furthermore, the upper mold 30 has a structure in which the flat portion 31 is formed on one surface that is inserted into the first groove 21 of the lower mold 20, and the protrusion 32 inserted into the second groove 22 additionally protrudes from the flat portion 31. In FIG. 2, although only the flat portion 31 and the protrusion 32 inserted into the first groove 21 and the second groove 22 are illustrated, the flat portion 31 and the protrusion 32 may be integrally formed. Here, a sliding device that is elevatably connected and a portion (not shown) configured to press the sealing portions 11a and 12a of the pouch may be further provided.

Thus, when the flat pouch sheet is placed between the upper mold 30 and the lower mold 20, the upper mold 30 may descend to the lower mold 20 (or the lower mold ascends to the upper mold) to press the pouch sheet between the upper mold 30 and the lower mold 20.

After the pressing is performed, when the upper mold 30 and the lower mold 20 are separated from each other, the first seating part 1 and the second seating part 12 are formed on a portion of the pouch sheet, which is pressed by the flat portion 31, and the sidewall 13 which connects the first seating part 11 to the second seating part 12 and forms a surface parallel to a side surface of the electrode assembly 1 when the electrode assembly 1 is mounted is formed is formed on a portion of the pouch sheet, which is pressed by the protrusion 32.

Here, each of an edge portion of the upper mold 30 and an edge portion of the protrusion 32, which are inserted into the first groove 21, may be rounded at a predetermined curvature, and an edge portion of the lower mold 20, in which the first groove 21 is formed, may be rounded at a predetermined curvature. This is done for preventing the pouch sheet from being damaged during the pressing when a pressure is concentrated into the edge portion. The curvature may also be determined according to the elongation rate of the metal layer of the pouch sheet.

### Second Embodiment

The present invention provides a pouch capable of being manufactured using the apparatus for molding the pouch according to the first embodiment as a second embodiment.

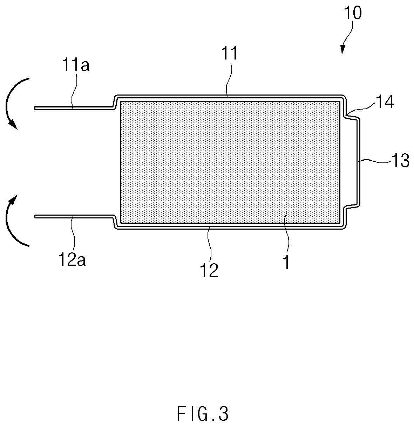

FIG. 3 is a cross-sectional view illustrating a state in which an electrode assembly 1 is mounted in the pouch 10 manufactured using the apparatus for molding the pouch of FIG. 2. Referring to the drawings, the pouch 10 provided in this embodiment comprises a first seating part 11 and a second seating part 12, which are connected to each other. When the electrode assembly 1 is mounted, the first seating part 11 and the second seating part 12 are respectively folded to cover top and bottom surfaces of the electrode assembly 1 so as to be sealed in a state in which sealing portions 11a and 12a of the first seating part 11 and the second seating part 12 are in contact with each other.

Here, the first seating part 11 covers one of upper and lower portions of the electrode assembly 1, and the second seating part 12 covers the other one of the upper and lower portions of the electrode assembly 1.

Also, the first seating part 11 and the second seating part 12 are connected to each other through a sidewall 13 of which one side is connected to one side of the first seating part 11, and the other side is connected to the second seating part 12.

The sidewall 13 may be folded so as to be perpendicular to the first seating part 11 and the second seating part 12 and be formed in a flat planar shape on both inner and outer surfaces of the pouch 10.

That is, in the structure according to the related art, a bent point C is formed at a point at which the first seating part 3 and the second seating part 4 are connected to each other to provide a portion that protruding outward from the pouch, and thus, the pouch is not flat. However, in the structure according to this specification, since the first seating part 11 and the second seating part 12 are bent at both ends of the sidewall 13, respectively, the bent point C may be removed, and thus, all of inner and outer surfaces of the pouch 10 may have flat planar shapes. Thus, the pouch 10 according to this specification may have a cleaner appearance compared to the structure according to the related art.

For reference, the expression 'perpendicular' described in the present invention does not mean only an exact right angle, but mean a state that is approximately adjacent to the right angle when bending occurs between two components.

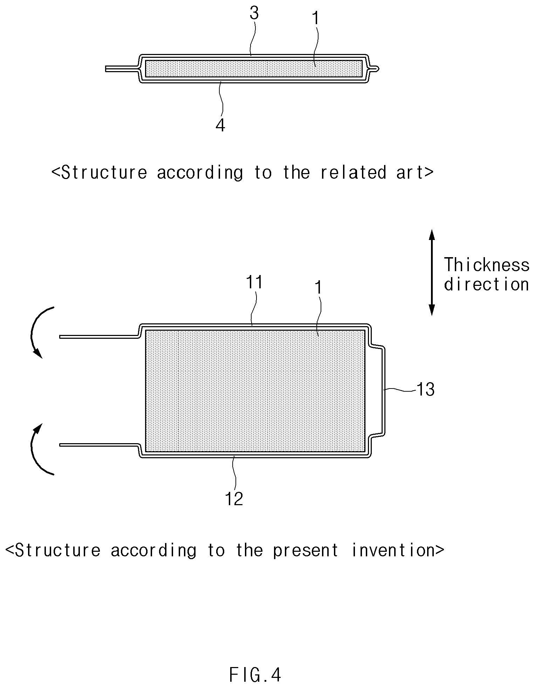

Referring to FIG. 4, when the pouch is molded by the apparatus for molding the pouch according to the present invention, a pouch capable of accommodating the accommodating the electrode having a significantly thicker thickness may be manufactured. Thus, as the thickness of the electrode assembly increases, the sidewall 13 may stands vertically with the first seating part 11 and the second seating part 12.

Therefore, the pouch according to this specification has a significantly more vertical shape compared to that according to the related art. Therefore, since the word vertical is used to express this state, the word vertical in this specification should not be interpreted as meaning only a right angle of 90 degrees.

For example, when the sidewall is folded at the first seating part or the second seating part, even though each of the first seating part and the second seating part is bent at an angle of 80 degrees or 100 degrees according to the increasing thickness of the electrode assembly, this may be considered as the vertically folded category if it may be considered as the pouch according to this specification.

Also, in the present invention, it should be understood as the meaning that the sidewall has a shape as a 'flat plane' does not mean only a state of a completely flat surface having a curvature of 0 because a radius of curvature infinitely increases at all points, but rather than a point or a curved shape as a whole compared to the related art.

Also, since the pouch is manufactured by laminating a thin metal layer and a resin layer, the pouch may be easily deformed by external force. Thus, if the pouch is manufactured without being curved or bent as a whole, when the pouch has a partial wrinkled shape or a slightly bent portion, it also should be regarded as being within the category of the 'flat plane'.

Furthermore, like the structure according to the related art, each of the first seating part 11 and the second seating part 12 is formed so that the sealing portion 11a and 12a extend from remaining sides except of a side connected to the sidewall 13. When the electrode assembly 1 is mounted to be folded, the sealing portion 11a of the first seating part 11 and the sealing portion 12a of the second seating part 12 are bonded to be sealed in a state of being in contact with each other.

Here, each of the sealing portions 11a and 12a may have a sufficient length so that the sealing portions 11 and 12a adhere to each other by the length of the sidewall 13. That is, when the first seating part 11 and the second seating part 12 are folded to be parallel to each other, the extending length of each of the sealing portion 11a of the first seating part and the sealing portion 12a of the second seating part, which respectively extend from the first seating part 11 and the second seating part 12, is determined according to the length of the sidewall 13 so that the sealing portion 11a of the first seating part and the sealing portion 12a of the second seating part are sealed.

A stepped portion 14 having a concavely recessed shape may be formed in each of an edge at which the first seating part 11 and the sidewall 13 are connected to each other and an edge which the second seating part 12 and the sidewall 13 are connected to each other. When the stepped portion 14 is molded in the above-described molding apparatus, if the resin layer stacked on the metal layer is a thermosetting resin, when a point that is pressed by the protrusion 32 and the second groove 22 is curved, each of the first seating part 11 and the seating part 12 may be bent at a position except for the point to form the stepped portion 14. As a result, if the resin layer of the pouch sheet has thermoplastic properties rather than thermosetting properties, the stepped portion 14 may not be formed.

In the pouch 10 having the above-described configuration as described above according to the present invention, the sidewall 13 connecting the first seating part 11 to the second seating part 12 may be formed to mount the electrode assembly 1having a thicker thickness by adjusting the thickness of the sidewall 13.

As illustrated in FIG. 4, which illustrates the state, in which the electrode assembly is mounted in the pouch according to the related art and the state, in which the electrode assembly having the thicker thickness is mounted in the pouch according to the present invention, in the pouch 2 according to the related art, the thickness of the mountable electrode assembly 1 is limited because the elongation of the metal layer is limited, but in the pouch 10 according to the present invention, the sidewall 13 has a flat surface that is not elongated between the upper mold 30 and the lower mold 20, and thus, a length of the flat surface is adjusted to mount the electrode assembly having the thicker thickness.

### Third Embodiment

The present invention provides a method for manufacturing a secondary battery comprising the pouch according to the second embodiment as a third embodiment.

A method for manufacturing a secondary battery according to this embodiment comprises a pouch molding step (S10) of molding a pouch and a sealing step (S20) of embedding an electrode assembly and an electrolyte in the molded pouch to seal a sealing portion of the pouch.

Here, the pouch molding step (S10) comprises a step (S11) of seating a pouch sheet on a lower mold 20 in which a first groove 21 recessed by a predetermined depth from a top surface thereof, and a second groove 22 is additionally recessed from a bottom surface of the first groove 21, and a step (S12) of pressing the pouch sheet to mold the pouch by using an upper mold 30 on which a flat portion 31 is formed on one surface thereof, which is inserted into the first groove 21, and a protrusion 32 inserted into the second groove 22 protrudes from the flat portion 31. Here, when the pouch sheet is pressed to be molded, a portion formed as a sidewall is molded so that each of both inner and outer surfaces has a flat planar shape.

Also, the pouch molding step (S10) comprises a step (S13) of folding the molded pouch. In this step, the pouch sheet is folded so that a first seating part 11 and a second seating part 12, which face each other, and a sidewall 13 connecting the first seating part 11 to the second seating part 12 are formed.

Here, in the step (S13) of folding the molded pouch sheet, the pouch sheet is folded so that the sidewall 13 is perpendicular to each of the first seating part 11 and the second seating part 12.

When the electrode assembly 1 and the electrolyte are embedded in the pouch manufactured as described above, heat and a pressure are applied to sealing portions of the pouch to perform the sealing step (S20).

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 1:: Electrode assembly
- 10:: Pouch
- 11:: First seating part
- 12:: Second seating part
- 20:: Lower mold
- 21:: First groove
- 22:: Second groove
- 30:: Upper mold
- 31:: Flat portion
- 32:: Protrusion

## Claims

1. An apparatus for molding a pouch, which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, the apparatus comprising:
a lower mold in which a first groove recessed by a predetermined depth from a top surface thereof is formed, and a second groove is additionally recessed from a bottom surface of the first grove; and
an upper mold on which a flat portion is formed on one surface thereof, which is inserted into the first groove, and a protrusion inserted into the second groove protrudes from the flat portion,
wherein, when the upper mold and the lower mold are pressed in a state in which the pouch sheet is placed between the upper mold and the lower mold, the pouch sheet is molded so that each of the first seating part and the second seating part are molded at a portion of the pouch sheet, which is pressed by the flat portion, and a sidewall configured to connect the first seating part to the second seating part and form a surface parallel to a side surface of the electrode assembly when the electrode assembly is mounted is formed.

2. The apparatus of claim 1, wherein the pouch is formed by stacking a metal layer made of an aluminum material and a resin layer made of a polymer material, and
a height of the protrusion protruding from the flat portion is determined according to an elongation rate of the metal layer.

3. The apparatus of claim 1, wherein the second groove is disposed at a center of the first groove, and the protrusion is disposed at a center of the flat portion.

4. The apparatus of claim 3, wherein each of an edge portion of the upper mold, which is inserted into the first groove, and an edge portion of the protrusion is rounded at a predetermined curvature.

5. The apparatus of claim 3, wherein an edge portion of the lower mold, in which the first groove is formed, is rounded at a predetermined curvature.

6. A pouch which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, the pouch comprising:
the first seating part configured to cover one of upper and lower portions of the electrode assembly;
the second seating part configured to cover the other one of the upper and lower portions of the electrode assembly and have one side connected to one side of the first seating part; and
a sidewall having one side connected to one side of the first seating part and the other side connected to the second seating part,
wherein the sidewall is folded at each of the first seating part and the second seating part and is formed in a flat planar shape on each of both inner and outer surfaces of the pouch.

7. The pouch of claim 6, wherein the sidewall is folded to be perpendicular to the first seating part and the second seating part.

8. The pouch of claim 6, wherein each of the first seating part and the second seating part is formed by allowing a sealing portion to extend from each of remaining sides except for a side connected to the sidewall, and
when the electrode assembly is mounted to be folded, the sealing portion of the first seating part and the sealing portion of the second seating part are sealed.

9. The pouch of claim 8, wherein, when the first seating part and the second seating part are folded to be parallel to each other, an extending length of each of the sealing portion of the first seating part and the sealing portion of the second seating part, which respectively extend from the first seating part and the second seating part, is determined according to a length of the sidewall so that the sealing portion of the first seating part and the sealing portion of the second seating part are sealed.

10. The pouch of claim 6, wherein a stepped portion having a concavely recessed shape is formed in each of an edge configured to connect the first seating part to the sidewall and an edge configured to connect the second seating part to the sidewall.

11. A method for manufacturing a secondary battery comprising a pouch, which comprises a first seating part and a second seating part, which are connected to each other, wherein when an electrode assembly is mounted, the first seating part and the second seating part are folded to cover top and bottom surfaces of the electrode assembly, thereby manufacturing the pouch that is sealed in a state in which the first seating part and the second seating part are in contact with each other, and an electrode assembly, which is embedded together with an electrolyte in the pouch, the method comprising:
a pouch molding step (S10) of molding the pouch; and
a sealing step (S20) of embedding the electrode assembly and the electrolyte in the molded pouch to seal a sealing portion of the pouch,
wherein the pouch molding step (S10) comprises:
a step (S11) of seating a pouch sheet on a lower mold in which a first groove recessed by a predetermined depth from a top surface thereof, and a second groove is additionally recessed from a bottom surface of the first groove;
a step (S12) of pressing the pouch sheet to mold the pouch by using an upper mold on which a flat portion is formed on one surface thereof, which is inserted into the first groove, and a protrusion inserted into the second groove protrudes from the flat portion; and
a step (S13) of folding a pouch sheet that is molded to form first and second seating parts, which face each other, and a sidewall connecting the first seating part to the second seating part.

12. The method of claim 11, wherein the sidewall is molded so that each of both inner and outer surfaces thereof has a flat planer shape.

13. The method of claim 12, wherein, in the step (S13) of folding the molded pouch sheet, the sidewall is folded to be perpendicular to the first seating part and the second seating part.
